# DEMANDE DE BREVET EUROPEEN

(11) **EP 4 838 665 A1**
(43) Date de publication de la demande: **11.11.2026**
(21) Numéro de dépôt: 26176402.1
(22) Date de dépôt: 05.05.2026
(51) Int. Cl.: H01M 50/291, H01M 50/271, H01M 50/249

(54) **ELÉMENT DE PROTECTION POUR MODULE DE BATTERIE ÉLECTRIQUE**

(30) Priorité: 05.05.2025 FR 2504743
(71) Demandeur: Renault s.a.s, 92100 Boulogne Billancourt (FR)
(72) Inventeur: FOUBERT, Vincent, 78280 Guyancourt (FR); MAUDUIT, Thomas, 78280 Guyancourt (FR); VASSEL, Rodolphe, 78280 Guyancourt (FR)

(57) **Abrégé**

Module de batterie (1), notamment destiné à être intégré dans un véhicule électrique, comportant :
- un boitier (2)
- des cellules de batterie (5)
- un couvercle (3) configuré pour fermer le boitier (2), de sorte que le boitier (2) et le couvercle (3) définissent alors un volume fermé dans lequel les cellules de batterie (5) sont disposées,
- un joint d'étanchéité (7) formant une interface étanche au contact du boitier (2) et du couvercle (3) lorsque ledit couvercle (3) ferme le boitier (2),
- un élément de protection (10) comportant une forme en relief (F) disposé à l'intérieur du boîtier, de manière à former un écran entre le joint d'étanchéité (7) et l'élément de fermeture (52) lorsque ledit couvercle (3) ferme le boitier (2)

## Description

### Domaine technique

La présente invention se situe dans le domaine de la sécurité des véhicules électriques, et plus particulièrement dans la protection contre les incidents thermiques des composants critiques des batteries de propulsion.

### Technique antérieure

Les batteries de propulsion des véhicules électriques sont des éléments essentiels qui nécessitent des mesures rigoureuses pour garantir la sécurité des occupants du véhicule. En cas d'incident thermique, des projections de gaz chauds en provenance des cellules de batteries peuvent survenir. Il est ainsi crucial d'assurer l'étanchéité du module de batterie, au moins pendant une durée suffisante pour permettre aux occupants du véhicule d'échapper à toute infiltration de gaz à haute température dans l'habitacle. En particulier, les normes récentes, par exemple la norme GTR-EVS (de l'anglais « Global Technical Regulation - Electric Vehicle Safety »), requièrent une étanchéité du module de batterie, en cas d'incident thermique de la batterie, empêchant l'apparition de fumée dans l'habitacle d'un véhicule jusqu'à six minutes après détection de l'incident par les occupants du véhicule. À ce jour, il n'existe pas de solution unique permettant de garantir, au moins temporairement, l'étanchéité du pack batterie en cas d'incident thermique. Le problème technique à résoudre consiste à garantir l'étanchéité du module de batterie contre les jets de gaz à hautes températures lors d'incidents thermiques sur la batterie.

### Résumé de l'invention

L'invention vise à répondre à tout ou partie de ce besoin et elle y parvient grâce à un module de batterie, notamment destiné à être intégré dans un véhicule électrique, comportant :
- un boitier
- des cellules de batterie disposées dans des modules comportant un élément de fermeture,
- un couvercle configuré pour fermer le boitier, de sorte que le boitier et le couvercle définissent alors un volume fermé dans lequel les cellules de batterie sont disposées,
- un joint d'étanchéité formant une interface étanche au contact du boitier et du couvercle lorsque ledit couvercle ferme le boitier,
- un élément de protection comportant une forme en relief disposée à l'intérieur du boîtier, de manière à former un écran entre le joint d'étanchéité et l'élément de fermeture lorsque ledit couvercle ferme le boitier.

La présente invention peut permettre d'assurer la protection du joint d'étanchéité du module de batterie.

Grâce à l'invention, on peut disposer d'une conception compacte et intégrée d'un élément de protection permettant de limiter, voire d'annuler, une défaillance d'étanchéité du joint périphérique. Dans les véhicules de l'art antérieur, le joint d'étanchéité est directement exposé aux projections de gaz chauds, ce qui peut rapidement endommager le joint et compromettre l'étanchéité du module de batterie. Dans l'invention, l'élément de protection joue au moins un rôle de retardateur quant à une dégradation du joint d'étanchéité par les projections de gaz chaud.

En outre, l'utilisation d'un élément de protection selon l'invention peut être transposé au sein de tout dispositif comportant des cellules de batterie électrique.

Par la suite, la formulation « lorsque le module de batterie est fermé » signifiera « lorsque le couvercle ferme le boitier ».

Par « le boitier et le couvercle définissant alors un volume fermé », il faut comprendre ici que le boitier et le couvercle forment conjointement une paroi périphérique du module de batterie faisant frontière entre l'intérieur et l'extérieur du module de batterie.

Par « point matériel d'un élément », on désigne ici un point dans l'espace en trois dimensions appartenant audit élément, autrement dit faisant partie du volume physique défini par l'élément.

### Module de batterie

Le module de batterie peut comporter divers éléments de fixation configurés pour permettre le maintien et la protection des cellules de batterie, par exemple une équerre de fixation, et/ou des longerons, et/ou des renforts, et/ou ou des éléments de visserie. Le module de batterie peut être intégré à tout type de véhicule automobile électrique.

### Boitier

Le boitier peut présenter une forme générale parallélépipédique, notamment une forme de bassine.

Le boitier peut comporter une paroi de fond sensiblement plane, et une paroi latérale. En particulier, le boitier peut définir un logement destiné à recevoir les cellules de batteries.

Le boitier peut comporter au moins une bordure de boitier destinée à épouser le joint d'étanchéité lorsque le couvercle ferme le boitier.

La bordure de boitier peut s'étendre au moins partiellement, voire intégralement, le long de la paroi latérale.

Le boitier peut être réalisé au moins partiellement en métal, par exemple en aluminium.

### Couvercle

De préférence, le couvercle est amovible. Par « couvercle amovible », il faut comprendre que le couvercle peut être retiré du boitier, pouvant être démonté, libérant l'accès aux cellules de batteries disposées à l'intérieur du module de batterie, et/ou remonté de manière à fermer le boitier, sans qu'il ne soit nécessaire de démonter le reste du module de batterie. Un couvercle amovible permet un montage et un démontage rapide. Le couvercle peut être monté et démonté plusieurs fois. En particulier, le couvercle peut être retiré sans déformation mécanique irréversible du boitier.

Le couvercle peut comporter au moins une bordure de couvercle destinée à épouser le joint d'étanchéité lorsque le couvercle ferme le boitier.

La bordure de couvercle peut s'étendre au moins partiellement, voire intégralement, le long de la périphérie du couvercle.

Le couvercle peut être vissé au boitier aux moyens d'éléments de fixation du couvercle, notamment des éléments de visserie.

De préférence, le couvercle peut être amovible.

Le couvercle peut être réalisé au moins partiellement en métal, notamment en aluminium.

### Joint d'étanchéité

Le joint d'étanchéité peut s'étendre au moins partiellement, mieux intégralement, le long de la bordure de boitier et/ou de la bordure de couvercle.

En particulier, lorsque le couvercle ferme le boitier, le joint d'étanchéité est maintenu simultanément au contact de la bordure de boitier et de la bordure de couvercle, notamment entre ceux-ci. Ainsi, le joint d'étanchéité forme une interface étanche entre la bordure de boitier et la bordure de couvercle.

Le joint d'étanchéité peut présenter une forme annulaire. Dans ce cas, la bordure de boitier et la bordure de couvercle s'étendent respectivement intégralement le long de la paroi latérale du boitier et de la périphérie du couvercle.

Dans le cas où la bordure de boitier et/ou la bordure de couvercle est rectiligne, le joint d'étanchéité peut présenter une forme de bande et s'étendre rectilignement le long de ladite bordure de boitier et/ou bordure de couvercle.

Le joint d'étanchéité peut être constitué d'un matériau élastomère, notamment en caoutchouc. Par exemple, le matériau peut être un Ethylène-Propylène-Diène Monomère (ou EPDM), un Butadiène-acrylonitrile (ou caoutchouc nitrile), du silicone, ou un fluoroélastomère. En exemple encore, le matériau peut être un polymère thermoplastique, une mousse de silicone, ou un métal recouvert d'un matériau en caoutchouc.

### Elément de protection

L'élément de protection peut comporter une forme en relief disposée à l'intérieur du boîtier, de manière à former un écran entre le joint d'étanchéité et l'élément de fermeture lorsque ledit couvercle ferme le boitier.

Ainsi, l'ensemble des projections de gaz chauds en provenance des cellules de batterie peuvent être déviés par l'élément de protection

La forme en relief peut être une bosse faisant saillie vers l'intérieur du module de batterie lorsque le module de batterie est fermé.

L'élément de protection peut être un profilé, notamment un profilé incurvé, s'étendant le long du joint d'étanchéité lorsque le couvercle ferme le boitier. Dans ce cas, chaque section transversale de l'élément de protection peut être identique. Par « section transversale » de l'élément de protection, on désigne la section obtenue en coupant l'élément de protection selon un plan perpendiculaire à son axe d'élongation, notamment son axe d'élongation le long du joint d'étanchéité. Alternativement, l'élément de protection peut comporter des sections transversales différentes.

Dans le cas où le joint d'étanchéité présente une forme annulaire, l'élément de protection peut alors avoir une forme générale annulaire en relief.

L'élément de protection peut comporter une épaisseur sensiblement identique à une épaisseur du couvercle, et/ou une épaisseur de la paroi latérale du boitier, et/ou une épaisseur de la paroi de fond du boitier.

L'élément de protection peut être intégré au couvercle. Ainsi, les coûts de développement et de production du module de batterie peuvent être réduits.

Dans le cas où l'élément de protection est intégré au couvercle, la bordure de couvercle peut être formée par l'élément de protection.

En particulier, l'élément de protection peut être réalisé d'un seul tenant avec le couvercle. Alternativement, l'élément de protection peut être une pièce rapportée sur le couvercle.

Par « rapportée », il faut comprendre que l'élément de protection est ajouté au couvercle lors du montage, le couvercle et l'élément de protection étant deux pièces distinctes.

En variante, l'élément de protection peut être intégré à la paroi latérale du boitier. L'élément de protection peut alors être réalisé d'un seul tenant avec la paroi latérale du boitier, ou être une pièce rapportée sur la paroi latérale du boitier.

L'élément de protection est configuré pour définir une cavité extérieure au module de batterie lorsque le couvercle ferme le boitier, de manière à permettre le passage d'éléments de câbles et/ou tuyaux le long du module de batterie. En particulier, l'élément de protection définit une frontière entre l'intérieur du module de batterie et l'extérieur du module de batterie, et une cavité extérieure, notamment s'étendant vers l'intérieur du module de batterie, pour recevoir les éléments de câbles et/ou tuyaux. Ainsi, l'implantation de divers éléments de passage, notamment l'implantation des tuyaux de freins, des câblages et des tuyaux de refroidissement, au sein de la cavité aménagée par la forme de l'élément de protection est rendue possible. L'espace occupé par le module de batterie peut être réduit, et l'espace ainsi libéré peut être utilisé pour des fonctions de passage. En outre, l'élément de protection selon l'invention est facile à mettre en œuvre et ne nécessite pas de réglages complexes.

Grâce à l'élément de protection présentant une forme en relief selon l'invention, on peut ainsi bénéficier d'un double avantage, en protégeant à la fois le joint d'étanchéité d'éventuelles projections de gaz chauds, et en permettant un gain d'espace permettant le passage de tuyauterie ou de câblage le long du module de batterie.

Notamment, l"élément de protection est constitué d'un matériau métallique, notamment en acier ou en aluminium.

### Véhicule automobile

L'invention a également pour objet, indépendamment ou en combinaison avec ce qui précède, un véhicule automobile équipé d'au moins un module de batterie, le module de batterie comportant :
- un boitier,
- des cellules de batterie,
- un couvercle configuré pour fermer le boitier, de sorte que le boitier et le couvercle définissent alors un volume fermé dans lequel les cellules de batterie sont disposées,
- un joint d'étanchéité formant une interface étanche au contact du boitier et du couvercle lorsque ledit couvercle ferme le boitier,
- un élément de protection comportant une forme en relief disposée à l'intérieur du boîtier, de manière à former un écran entre le joint d'étanchéité et l'élément de fermeture lorsque ledit couvercle ferme le boitier.

En particulier, le module de batterie intégré au véhicule automobile peut reprendre tout ou partie des caractéristiques mentionnées plus haut.

Le véhicule peut comporter un habitacle comportant un plancher, le boitier comportant une paroi horizontale parallèle au plancher. En particulier, la paroi horizontale au plancher est la paroi de fond.

### Brève description des dessins

[Fig 1] est une coupe perspective d'un module de batterie de l'art antérieur monté dans un véhicule automobile, illustrant la vulnérabilité du joint d'étanchéité en cas de défaillance thermique de la batterie.
[Fig 2] est une coupe perspective d'un autre module de batterie de l'art antérieur monté dans un véhicule automobile, illustrant des projections de gaz chauds due à une défaillance des cellules de batteries.
[Fig 3] est une coupe perspective d'un module de batterie selon un exemple de l'invention.
[Fig 4] est une coupe perspective analogue à la Fig 3 illustrant le volume externe aménagé par l'élément de protection.

### Description détaillée

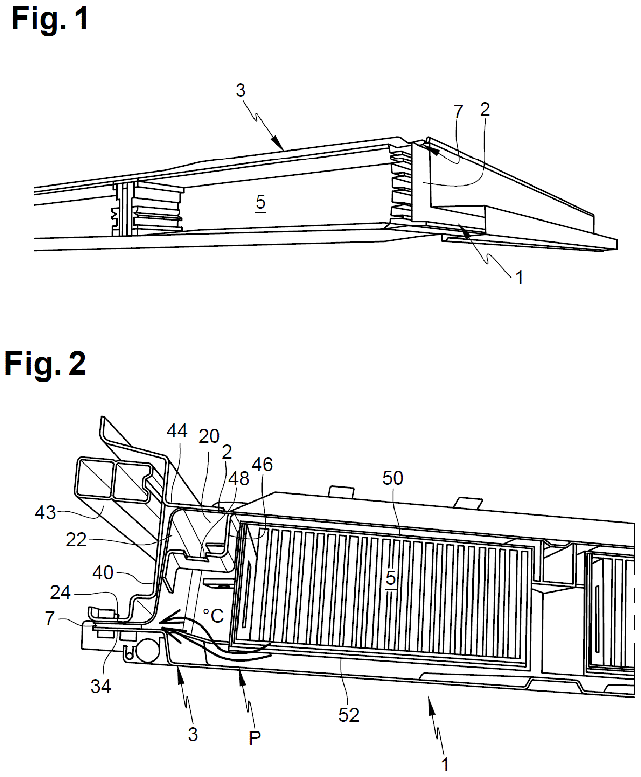

La figure 1 illustre de manière schématique un exemple de module de batterie d'un véhicule électrique de l'art antérieur où le joint d'étanchéité est particulièrement vulnérable à une défaillance thermique éventuelle de la batterie.

Le module de batterie 1 de la figure 1 comporte un boitier 2 et un couvercle 3 supérieur. Le module de batterie comporte en outre des cellules de batteries 5 et un joint d'étanchéité 7.

Le joint d'étanchéité est dans cet exemple directement exposé aux cellules de batterie.

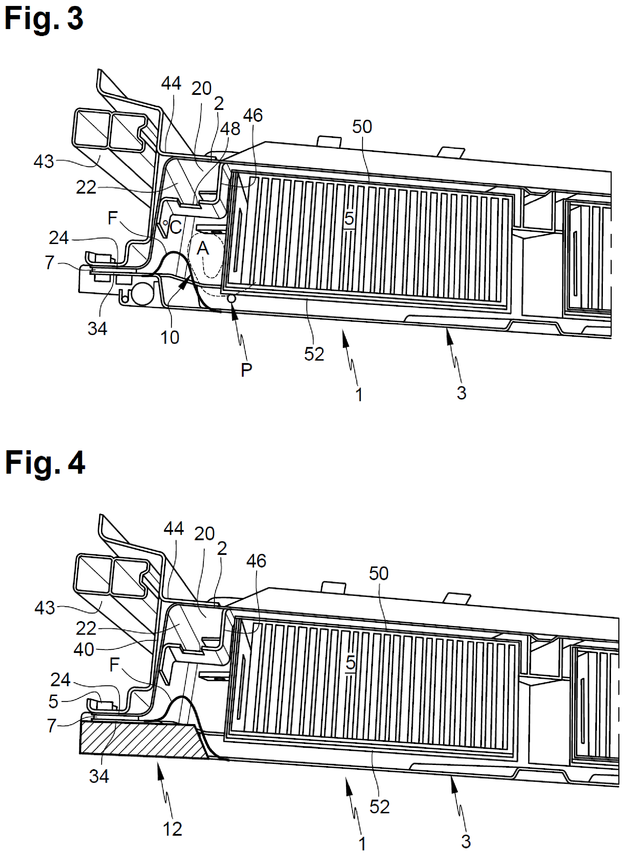

Les figures 2 et 3 illustrent des modules de batterie 1 montés dans un véhicule automobile, sans et avec un élément de protection 10.

Notamment, les modules de batterie sont ici montés directement sous le plancher ou sol de l'habitacle du véhicule automobile.

Comme visible sur la figure 2, le module de batterie 1 comporte un boitier 2, un couvercle 3 inférieur fermant le boitier 2.

Le boitier 2 présente une forme générale parallélépipédique rectangle.

Le boitier 2 comporte une paroi de fond 20 horizontale et des parois latérales 22. En particulier, la paroi de fond 20 peut définir une face intérieure principale. Les parois latérales 22 peuvent définir quatre faces intérieures latérales.

Le boitier 2 peut comporter une bordure de boitier 24 s'étendant à partir d'une extrémité distale de la paroi latérale 22 vers l'extérieur du boitier 2, notamment dans un plan parallèle à la paroi de fond 20.

Comme illustré en figure 2, le boitier 2 définit un logement configuré pour accueillir des cellules de batterie 5. Les cellules de batterie 5 sont notamment réunies dans des modules 50 fixés au boitier 2 au moyen d'équerre de fixation 46, et de longerons 48. Les modules 50 se présentent également sous la forme de boîtiers fermés par un élément de fermeture 52. Les cellules de batterie 5 sont ainsi maintenues sans contact direct avec la paroi de fond 20 et les parois latérales 22 du boitier 2.

Le couvercle 3 de la figure 2 présente une forme sensiblement plane, parallèle à la paroi de fond 20 du boitier 2.

Le couvercle 3 présente une bordure de couvercle 34 le long de sa périphérie.

Lorsque le couvercle 3 ferme le boitier, la bordure de boitier 24 et la bordure de couvercle 34 viennent conjointement en contact d'un joint d'étanchéité 7. Le joint d'étanchéité 7 est configuré pour former une interface hermétique le long desdites bordure de boitier 24 et bordure de couvercle 34.

En outre, différents éléments profilés de liaison et d'environnement de la batterie au sein du véhicule électrique sont représentés sur la figure 2, notamment un bavolet 40, un renfort de bavolet 43, ainsi qu'un élément de fermeture de bavolet 44, s'étendant selon un axe transversal au plan de coupe de la figure.

La figure 2 illustre le problème pouvant survenir lors d'une défaillance thermique des cellules de batteries 5. Lors d'une telle défaillance, et notamment sous l'effet d'une augmentation de pression, une déformation de l'élément de fermeture 52 peut amener à des projections P de gaz chauds en provenance des cellules de batterie 5 qui peuvent alors être projetées à l'intérieur du module de batterie 1, et peuvent rapidement entrer en contact avec le joint d'étanchéité 7. Il peut en résulter un endommagement du joint d'étanchéité 7, compromettant ainsi l'étanchéité du module de batterie 1, et pouvant alors exposer les occupants de l'habitacle du véhicule à des dégagements de gaz chauds et potentiellement nocifs.

L'exemple de module de batterie 1 selon l'invention illustré à la figure 3 est sensiblement analogue à celui décrit précédemment à la figure 2, à l'exception que le couvercle 3 du module de batterie 1 comporte un élément de protection 10 intégré audit couvercle 3.

Comme visible, l'élément de protection 10 présente une forme en relief F s'étendant vers l'intérieur du module de batterie et masquant le trajet le plus probable des projections P de gaz chauds lors d'une défaillance thermique des cellules. Tel qu'évoqué précédemment, l'élément de protection est préférentiellement situé, dans l'exemple proposé, en regard de l'élément de fermeture 52 des boîtiers 50, qui représente l'endroit le plus probable de départ des projections de gaz chaud hors des boîtiers 50 des cellules lors d'une défaillance thermique. L'élément de protection 10 s'étend notamment parallèlement le long du joint d'étanchéité 7. Notamment, l'élément de protection 10 présente une épaisseur sensiblement égale à celle du couvercle 3. L'élément de protection 10 forme ainsi une barrière protectrice du joint d'étanchéité 7 contre d'éventuelles projections P de gaz chauds susceptibles de l'endommager.

Les projections P de gaz chauds peuvent ainsi être déviées. Le risque d'un contact direct d'une projection P de gaz chaud avec le joint d'étanchéité 7 est considérablement, voire totalement réduit.

L'élément de protection 10 peut être un profilé présentant une forme F identique selon chaque coupe transversale dudit élément de protection 10. Par exemple, l'élément de protection peut présenter une forme générale annulaire, ou rectangulaire à angles arrondis de manière à garder une distance à la paroi latérale 22 du boitier 2 sensiblement constante.

Comme par exemple illustré sur la figure 3, La forme F en relief de l'élément de protection 10 observée selon une coupe transversale de l'élément de protection 10 peut être une forme arrondie, notamment une forme en cloche. Alternativement, elle peut être de forme rectangulaire, notamment en créneau, triangulaire, ou autre.

La figure 4 est une vue analogue à la figure 3, illustrant une cavité 12 extérieure du module de batterie définie par l'élément de protection lorsque le couvercle ferme le boitier.

Comme par exemple illustré sur la figure 4, l'élément de protection 10, notamment lorsque celui-ci est un profilé intégré au couvercle 3, définit une cavité 12 configurée pour permettre le passage d'éléments de câbles et/ou tuyaux le long du module de batterie entre l'avant et l'arrière du véhicule automobile. L'écran ainsi formé par la protection F rend possible l'intégration de passages de câbles au sein du boîtier 2. L'invention n'est pas limitée aux exemples décrits.

Par exemple, le module de batterie selon l'invention peut être employé dans tout type d'appareils électriques avec un module de batterie intégré.

En outre, l'élément de protection 10 peut être intégré dans tout type de dispositifs nécessitant de répondre à des contraintes de protection de certains éléments, notamment un joint, et d'optimisation d'espace.

## Revendications

1. Module de batterie (1), notamment destiné à être intégré dans un véhicule électrique, comportant :
- un boitier (2),
- des cellules de batterie (5) disposées dans des modules (50) comportant un élément de fermeture (52),
- un couvercle (3) configuré pour fermer le boitier (2), de sorte que le boitier (2) et le couvercle (3) définissent alors un volume fermé dans lequel les cellules de batterie (5) sont disposées,
- un joint d'étanchéité (7) formant une interface étanche au contact du boitier (2) et du couvercle (3) lorsque ledit couvercle (3) ferme le boitier (2),
- un élément de protection (10) comportant une forme en relief (F) disposée à l'intérieur du boîtier, de manière à former un écran entre le joint d'étanchéité (7) et l'élément de fermeture (52) lorsque ledit couvercle (3) ferme le boitier (2).

2. Module de batterie (1) selon la revendication précédente, dans lequel l'élément de protection (10) est intégré au couvercle (3).

3. Module de batterie (1) selon la revendication précédente, dans lequel l'élément de protection (10) est réalisé d'un seul tenant avec le couvercle (3).

4. Module de batterie (1) selon la revendication 2, dans lequel l'élément de protection (10) est une pièce rapportée sur le couvercle (3).

5. Module de batterie (1) selon l'une des revendications précédentes, l'élément de protection (10) étant un profilé s'étendant le long du joint d'étanchéité (7) lorsque le couvercle (3) ferme le boitier (2).

6. Module de batterie (1) selon la revendication précédente, dans lequel chaque section transversale de l'élément de protection est identique.

7. Module de batterie (1) selon l'une des revendications précédentes, dans lequel l'élément de protection (10) est configuré pour définir une cavité extérieure (12) au module de batterie (1) lorsque le couvercle (3) ferme le boitier, de manière à permettre le passage d'éléments de câbles et/ou tuyaux le long du module de batterie.

8. Véhicule automobile équipé d'au moins un module de batterie (1), le module de batterie (1) comportant :
- un boitier (2),
- des cellules de batterie (5),
- un couvercle (3) configuré pour fermer le boitier (2), de sorte que le boitier (2) et le couvercle (3) définissent alors un volume fermé (12) dans lequel les cellules de batterie (5) sont disposées,
- un joint d'étanchéité (7) formant une interface étanche au contact du boitier (2) et du couvercle (3) lorsque ledit couvercle (3) ferme le boitier (2),
- un élément de protection (10) comportant une forme en relief (F) disposée à l'intérieur du boîtier, de manière à former un écran entre le joint d'étanchéité (7) et l'élément de fermeture (52) lorsque ledit couvercle (3) ferme le boitier (2).

9. Véhicule selon la revendication précédente, le véhicule comportant un habitacle comportant un plancher, le boitier (2) comportant une paroi horizontale parallèle au plancher.
